# EUROPEAN PATENT APPLICATION

(11) **EP 3 051 770 A1**
(43) Date of publication of application: **03.08.2016**
(21) Application number: 15382034.5
(22) Date of filing: 02.02.2015
(51) Int. Cl.: H04L 29/06, H04L 29/08

(54) **User opt-in computer implemented method for monitoring network traffic data, network traffic controller and computer programs**

(71) Applicant: Telefonica Digital España, S.L.U., 28013 Madrid (ES)
(72) Inventor: Guijarro Guillem, David, 28013 Madrid (ES); Pando Cao, Arcadio, 28013 Madrid (ES); Yang, Xiaoyuan, 28013 Madrid (ES); Levi, Martín I., 28013 Madrid (ES)
(74) Representative: Carlos Hernando, Borja

(57) **Abstract**

The method being based on a Certification Authority (CAᵤ) that is controlled by a user (100) having a computing device (101) with a computer application (102) installed therein, the method comprising using said computer application (102) for: generating a Certification Authority (CAᵤ) relative to the user (100) comprising at least a private key (Priᵤ) and a public key (Pubᵤ); generating a domain certificate (C_{D}) for a given domain (D) of a server (105, 106); signing the generated domain certificate (C_{D}) with said private key (Priᵤ); and sending the signed domain certificate (C_{D}) and the public key (Pubᵤ) at least to a network traffic controller (104).

## Description

### Field of the art

The present invention is directed, in general, to the field of internet security. In particular, the invention relates to a user opt-in computer implemented method for monitoring network traffic data, based on a Certification Authority that is controlled by a user, to a network traffic controller and to computer programs products thereof.

### Background of the invention

The Internet is experiencing one of the most significant changes since its creation in the 1980s. New services are launched every day, creating new sources of personalized data collected by increasingly sophisticated devices featuring multiple sensors that measure everything possible in real-time. The explosion of data is so drastic that Telco companies are expecting a 10-fold increase in mobile network traffic within the next few years.

Not all Internet content/service is, however, good for end-users. New web pages with malwares are created every day to blackmail end-users in form of stealing personal information or controlling the end-users' computing devices for other uses. Community effort such as Pishtank® creates in real-time a list of phishing web pages that try to cheat end-users and steal the password or users' information to access other legitimate services.

As the mobile computing devices such as mobile phones become the main Internet access device for end-users, the number new mobile malwares has skyrocketed in recent years.

Compared with desk computing devices, e.g. PCs, malwares for mobile phones are much more difficult to mitigate due to the extremely immatureness of the ecosystem and closeness of some mobile Operative Systems (OS) platforms. Furthermore, most of nowadays-mobile devices are quite CPU capacity and battery limited that make traditional malware mitigation solutions impropriate for this new environment.

Network based solutions, such Bluecoat®, could be a nice solution for mobile computing devices because it could work seamlessly without any requirement or extra logic in the computing devices. However, such solution is traditionally oriented to enterprise environment with very limited concurrent active computing devices.

Large-scale network based solutions do also exist. Telefonica® solution Canguro Net Plus is one example where network operator provides malware detection and parental control for their subscribers on ADSL. Such solutions could be extended to mobile network.

Although network based solutions are highly suitable for mobile computing devices, the solution coverage is most of time limited to the unencrypted traffic. Awazza® solution, for instance, provides information protection mechanisms for HTTP unencrypted traffic.

In order to extend the malware protection coverage of network-based solutions to encrypted traffic, different proposals have been considered. Trusted-proxy protocol standard [1] is proposed to allow a network proxy to explicitly declare its existence, so end-users can opt-in to open encrypted traffic.

Other solution widely adopted in enterprise environment is based on installing a digital certificate of an enterprise-level certification authority (CA) in the computing device. Once the CA certificate is installed, proxies in the enterprise network can perform decryption of encrypted traffic and perform the malware detection. Decrypted traffic is then again encrypted using a local generated certificate that contains the signature of the enterprise CA.

The main challenge of the solutions that are based on installing a CA certificate in end-user computing device is the security concern of a possible main-in-the-middle attack. A hacker with access to the enterprise CA private key can potentially analyze all encrypted traffic. Such concern is, however, not a problem in enterprise space because personal privacy barrier is easier to navigate. When the solution of this kind is scaled to larger scale, security concerns become palpable.

Security infrastructure has to be in place to protect different elements that has access to private key of CA. Furthermore, white list has to be created to list the domains that network solution is allowed to perform malware detection. Each end-user should be able to customize the own list and the personal list should be highly protected to avoid third party manipulations.

### Summary of the Invention

Embodiments of the present invention provide according to a first aspect a user opt-in computer implemented method for monitoring network traffic data, based on a Certification Authority that is controlled by a user, wherein said user has a computing device with a computer application installed therein. According to the provided method, the computer application is used for performing the following steps: generating a Certification Authority relative to the user comprising at least a private key and a public key; generating a domain certificate for a given domain of a server; signing the generated domain certificate with said private key; and sending the signed domain certificate and the public key at least to a network traffic controller.

The generated domain certificate may be signed by the computer application downloading an encrypted private key from a key store repository of the computer application. The encrypted private key is the result of having encrypted the private key with an encryption function. Then, the user, via the computer application may provide an inverse function of said encryption function to decrypt the encrypted private key. The inverse function of the encryption function is kept secret by the user.

In accordance with an embodiment, the public key, the encrypted private key, the encryption function and the signed domain certificate are stored in the key store repository of the computer application.

In accordance with an embodiment, the private key and the public key of the Certification Authority relative to the user are generated upon the computer application has verified identification information, e.g. name and a password, provided by the user.

In accordance with another embodiment, upon the network traffic controller has received the signed domain certificate and the public key from the computer application, the network traffic controller further receives a request from the user indicating a wish of the latter to create an encrypted connection with said domain. The network traffic controller checks whether the user wants to supervise the domain, and upon a valid check, i.e. the user do want to supervise the domain, the network traffic controller sends the received signed domain certificate to user as the certificate for the domain, and establishes, e.g. in parallel of the sending, the encrypted connection with the domain. Finally, a session key is established between the network traffic controller and the user for the rest of the encrypted communications of the user, wherein said communications are continuously supervised by the network traffic controller.

The checking of the domain in order to supervise may include checking that the domain is not included in a data structure, e.g. a white list, of the computer application. The data structure includes a number of domains for which no supervision has to be performed by the network traffic controller.

The encrypted connection may be a Secure Sockets Layer/Transport Layer Security (SSL/TLS) connection.

Embodiments of the present invention provide according to a second aspect a network traffic controller for monitoring network traffic data of a user. The network traffic controller includes at least a supervision unit configured to: intercept at least one request from a user having a computing device indicating a wish of the user to create an encrypted connection with a given domain of a server; check that the user wants to supervise said domain; in case of a valid check, send a previously received signed domain certificate relative to user to the latter as the certificate for domain; establish an encrypted connection with domain; and establish a session key with the user for the rest of the encrypted communications of the user.

The received signed domain certificate is signed by a computer application installed in the computing device by means of a first engine unit that generates a Certification Authority relative to the user comprising at least a private key and a public key, and a second engine unit that generates the domain certificate for the domain and to signs the generated domain certificate with said private key.

In addition, the provided network traffic controller further includes a hardware unit that controls the interception of the at least one request and a control unit that controls the hardware unit and provides a presentation layer for the supervision unit visible for the user.

The supervision unit, the hardware unit and the control unit may be located in a same geographical location or alternatively in different geographical locations.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

With present invention, only a user with access to a decryption function could generate new valid (signed) domain certificates. In addition, hackers with access to network supervision systems can only access the traffic associated with domains that the user has created valid domain certificates, but never access other domains. For instance, traffic of bank that shouldn't be supervised could never been compromised.

Key store repository is neither one weak point, because only encrypted private key of the Certification Authority relative to the user is stored there. A hacker with access to key store repository could never recover the private key of the Certification Authority relative to the user.

### Brief Description of the Drawings

The previous and other advantages and features will be more deeply understood from the following detailed description of embodiments, with reference to the attached, which must be considered in an illustrative and non-limiting manner, in which:
Fig. 1 is an illustration of the present invention general architecture.
Fig. 2 is an example of the network traffic controller design according to an embodiment.
Fig. 3 is an example of the network traffic controller logic to decide whether an encrypted request should be supervised.
Fig. 4 is an example of the computer application installed in a computing device of a user design according to an embodiment.
Fig. 5 illustrates a sequence diagram to generate a private and a public key of a Certification Authority relative to a user according to an embodiment.
Fig. 6 illustrates a sequence diagram to generate a domain certificate according to an embodiment.
Fig. 7 illustrates a TLS connection establishment process with supervision according to an embodiment.
Fig. 8 illustrates an encrypted traffic bypass process according to an embodiment.

### Detailed Description of the Invention and of Several Embodiments

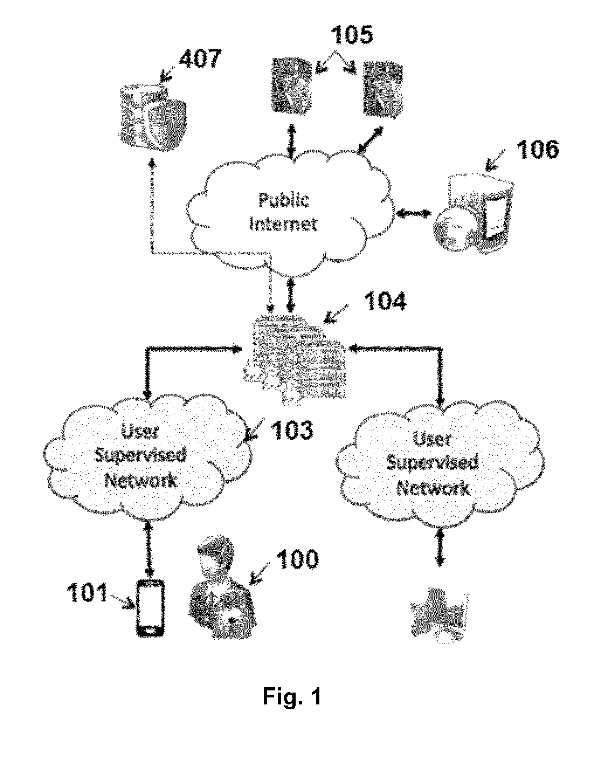

Fig. 1 shows the basic architecture elements used by present invention. The core of present invention is a user managed Certification Authority scheme. In addition, a new network traffic controller 104 is proposed where different security concern is mitigated including malware detection, content blocking, among many others.

All traffic of a user 100 is monitored and supervised by the network traffic controller 104 that performs different tasks in order to mitigate said security concerns. Network traffic controller 104 is totally distributed and could be composed from one to N elements. The N elements could be centralized in one physical geographic location or distributed geographically, according to the distribution of users. All traffic between network traffic controller 104 and the user 100 pass through a user supervised network 103. User supervised network 103 could be encrypted using VPN or just a public Internet network.

The user 100 via a computing device 101 accesses an online service (or different online services). Some of them will be provided as unencrypted traffic from web servers 106 whereas some of servers 105 will use end-to-end encryption schemes (such as SSL or TLS) to encrypt the traffic. Both encrypted and unencrypted traffic are monitored and supervised by network traffic controller 104.

In accordance with the proposed method, the user 100, via a computer application 102 installed in the computing device 101, characteristically manages its own Certification Authority CAᵤ certificate that is composed by a private key Priᵤ and public key Pubᵤ. The user 100, via the computer application 102, installs the public key Pubᵤ of the Certification Authority CAᵤ in the computing device 101, and via the computer application 102, encrypts the private key Priᵤ with an encryption function Fᵤ. The encrypted private key FᵤPriᵤ and the public key Pubᵤ are preferably stored in a key store repository 407 of the computer application 102.

The computer application 102 is used by the user 100 to generate a domain certificate C_{D} for any given domain D. The generated domain certificate C_{D} is then signed using the private key Priᵤ of the Certification Authority CAᵤ. Next, the signed domain certificate C_{D} may be also stored in the key store repository 407. Moreover, the signed domain certificate C_{D} (and all the domain certificates of the user 100) may be also transmitted by the user 100 via the computer application 102 to network traffic controller 104 who stores it (them).

In order to sign the domain certificate C_{D}, the computer application 102, first, downloads the encrypted private key FᵤPriᵤ from the key store repository 407. Second, the user 100, via the computer application 102, provides an inverse function of encryption function Fᵤ, i.e. Fᵤᵢ[FᵤPriᵤ]. Third, the computer application 102 decrypts the encrypted private key FᵤPriᵤ using said inverse function Fᵤᵢ[FᵤPriᵤ]. Finally, the computer application 102 signs the domain certificate C_{D} with the private key Priᵤ

Only the user 100 has access to said inverse function Fᵤᵢ[FᵤPriᵤ] which it is not stored in any persistent memory of the computer application 102. That is, the user 100 keeps it secret.

Furthermore, a data arrangement or white list may be included, according to an embodiment, by the user 100 in the computer application 102. Domains in this data arrangement could not be supervised by the network traffic controller 104. For instance, domains that bellow to bank could be included in this data arrangement. This is important to not compromise critical sites due to unawareness of the user 100.

Once an encrypted connection is requested by the user 100 to domain D, the network traffic controller 104, if said domain D is not included in the data arrangement (according to the above described embodiment), checks it's availability of domain certificate *C_{D}* of the domain D. If domain certificate *C_{D}* exists, the network traffic controller 104 sends the domain certificate C_{D} to the user 100 as the certificate for domain D, establishes the encrypted connection requested with domain D and establishes a session key with the user 100 for the rest of the encrypted communications with the latter. The user communications will be continuously supervised by the network traffic controller 104.

Alternatively, if the domain certificate *C_{D}* doesn't exist in the network traffic controller 104, the traffic is bypassed to the server.

Following are described with more detail each of the architecture elements used by present invention and their corresponding functions.

### Network traffic controller 104

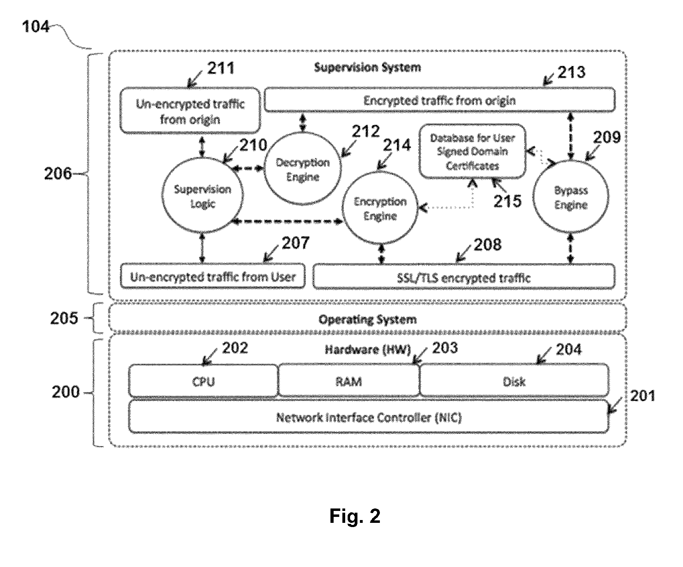

With reference to Fig. 2 therein is shown a preferred embodiment of the network traffic controller 104. A hardware unit/architecture 200 contains all necessary elements to perform traffic data interception monitoring/controlling, including a network interface controller NIC 201, a CPU 202, a memory RAM 203 and a persistent disk 204. All hardware elements are controlled and managed by a control unit 205 such as an Operating System that provides a presentation layer for a supervision unit 206 visible for the user 100 (i.e. a user-friendly layer). The supervision unit 206 is preferably the supervision layer of a supervision platform.

As traffic data from user 100 could be encrypted or unencrypted, the supervision unit 206 includes different units/modules depending on the type of traffic data. In case of an unencrypted traffic data 207, it will be directly passed to a supervision logic unit 210 (e.g. for malware detection, content blocking, etc.) that performs the task in all traffic data, both from the user 100 as well as from server 105, 106.

In case of encrypted traffic data 208, the user 100 via the computer application 102 is entitled to decide whether the traffic data should be supervised. For instance, traffic data to bank could be just bypassed to the bank entity without any supervision. In this particular case, a bypass engine unit 209 performs the traffic data bypass.

For those encrypted traffic data that are decided to be supervised, the supervision unit 206 preferably opens an independent SSL/TLS connection with server 105, 106. The encrypted traffic data 213 from server 105, 106 may be then decrypted by a decryption engine unit 212 and passed to the supervision logic unit 210 (e.g. for malware detection, content blocking, etc.). The supervised traffic data may be then re-encrypted by an encryption engine unit 214 and sent back to the computing device 101 of the user 100. In an alternative embodiment, in this case not illustrated, the decryption of the traffic data and the further re-encryption may be performed by a single decryption/encryption engine unit.

In order to re-encrypt the supervised traffic data, the encryption engine unit 214 uses the domain certificate C_{D} signed by the user 100 via the computer application 102 (previously stored by the network traffic controller 104 as explained before, for instance in a repository or database unit for user signed domain certificates 215). The repository 215 does also decide if an encrypted traffic data should be supervised or bypassed. Basically, an encrypted traffic data from/to domain D from/to the user 100 should be supervised, if and only if a domain certificate C_{D} for domain D, signed by the user 100 via the computer application 102, exist in the repository 215.

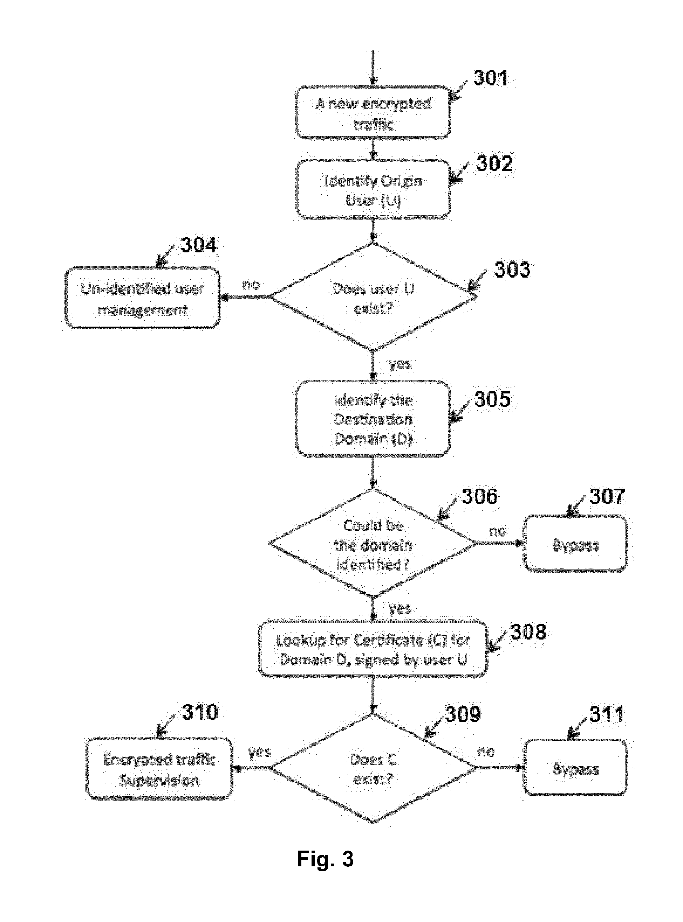

Fig. 3 shows an example of the logic that may be used by the network traffic controller 104 to decide whether an encrypted traffic data should be supervised. For each new encrypted traffic data 301, the network traffic controller 104 preferably first tries to identify the origin user 302. The network traffic controller 104 manages an un-identified user in step 304. The exact management policy for traffic data that couldn't be associated to any registered user is domain depend. For instance, network traffic controller 104 could decide to just bypass. Other policy could be rejecting any traffic data from unidentified users. The next step is to identify the destination domain D, step 305. If the destination domain D couldn't be correctly identified, the traffic data could be just bypassed 307. In other case, network traffic controller 104 lookups for a domain certificate C_{D} for the identified domain D signed by the identified user 308. If such a domain certificate C_{D} doesn't exist, the encrypted traffic data will be bypassed 311, in other case, the encrypted request will be monitored 310.

### Computer application 102

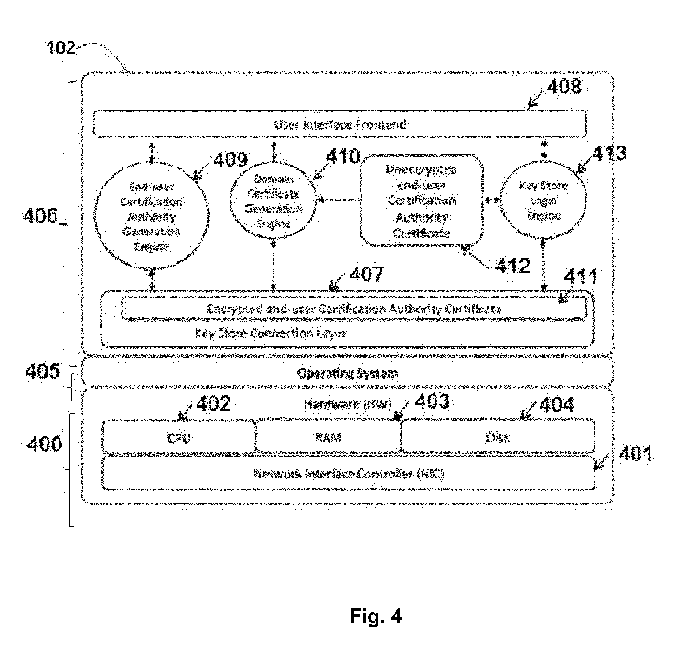

With reference to Fig. 4 therein is shown a preferred embodiment of the computer application 102 installed in the computing device 101 of the user 100 to manage different domain certificates that are used for supervision.

Present invention mainly uses two kinds of certificates: 1) user Certification Authority CAᵤ certificate which is the certificate used to sign any valid domain certificate C_{D}. This CAᵤ certificate is unique for the user 100 and preferably protected by a password (or any other form of user identity protection). This Certification Authority CAᵤ certificate can only be accessed by the user 100 with the correct protection used, in this particular case the password. 2) Domain certificate C_{D} which is the certificate used for each domain D that the user 100 wants to supervise, the user 100 via the computer application 102 has to generate a domain certificate C_{D} and sign it with the above mentioned Certification Authority CAᵤ certificate. The number of domain certificates, thus, depends on the number of domains that the user 100 wants to supervise and the total number of users.

Same as the preferred embodiment design of the network traffic controller 104, the computer application 102 preferably includes a hardware unit/architecture 400 with a NIC 401, a CPU 402, a RAM 403 and a Disk 404, and a control unit 405 such as an Operating System controlling said hardware elements. The exact form of hardware unit 400 and Operation System 405 could be a personal computer (PC) or a mobile computing device such as a mobile phone running different Operative Systems, such as Android®, iPhone®, Microsoft Windows®, Firefox OS® or others.

The computer application 102 runs in user space and it is composed by:
- the key store repository 407 that manages all network connections with a key store login engine 413;
- a user interface frontend 408 that provides all visual interfaces to the user 100;
- a first engine unit or user Certification Authority certificate generation engine 409 that creates the Certification Authority CAᵤ certificate. The generated Certification Authority CAᵤ certificate will preferably be encrypted 411 before being sent to the key store repository 407;
- the key store login engine 413 that provides all mechanism to login the key store repository 407 and download the encrypted Certification Authority CAᵤ certificate 411. With the correct password, the encrypted Certification Authority CAᵤ certificate 411 will be decrypted to an unencrypted user Certification Authority CAᵤ certificate 412. The unencrypted user Certification Authority CAᵤ certificate 412 only exists in RAM 403 and is never saved/exported to any persistent repository/memory (such as a disk 404); and
- a second engine unit or domain certificate generation engine 410 that generates the domain certificate C_{D} on demand and signs the generated domain certificate C_{D} with the unencrypted user Certification Authority CAᵤ certificate 412. The resulted signed domain certificate C_{D} will be, then, preferably sent to key store repository 407.

### User Certification Authority CAᵤ certificate generation

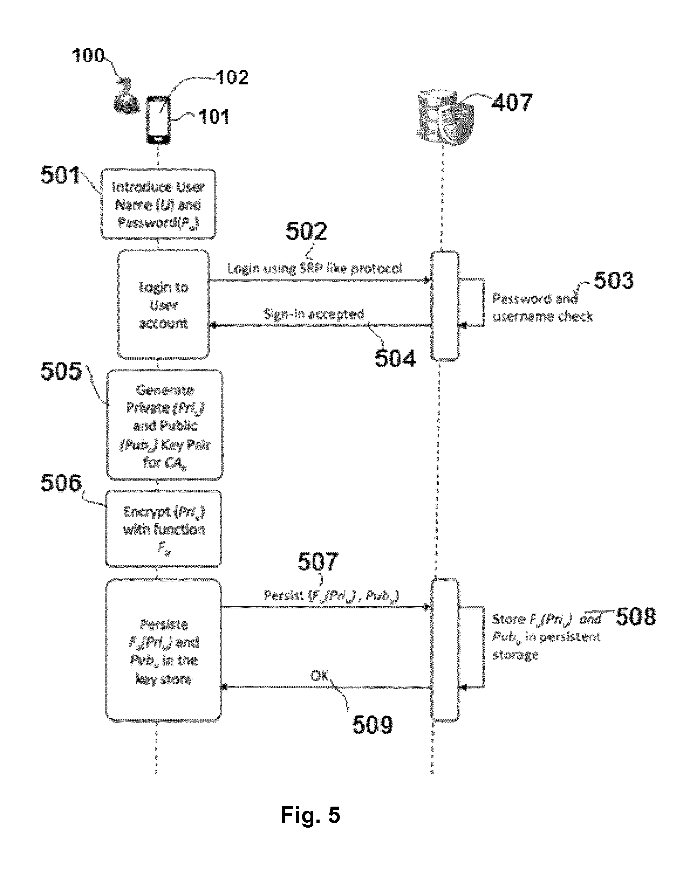

Fig. 5 shows the sequence diagram, according to an embodiment, to generate the private key Priᵤ and the public key Pubᵤ that will represent the Certification Authority CAᵤ certificate. The user 100, preferably, first logins, step 501, to a user account using own identification information including a correct user name and password. Present invention doesn't specify the exact protocol that will be used to implement the authentication between the user 100 and the key store repository 407. Any standard password authenticated key agreement (PAKA) method [2] could be used to avoid password guessing by eavesdropping. Other important property that should be guaranteed is that the user password Pᵤ is never revealed to key store repository 407. Only a hashed version of the password is stored.

Once authenticated (steps 502-504), the user 100 can generate the private key Priᵤ and the public key Pubᵤ of the own Certification Authority CAᵤ, step 505. The next step (506) will be encrypting the private key Priᵤ using the encryption function Fᵤ.

The encryption function Fᵤ may be any symmetric-key algorithm, meaning the same key is used for both encrypting and decrypting the data, could be used. One example is the Advanced Encryption Standard (AES) [3] established by the U.S. National Institute of Standards and Technology (NIST) in 2001. In order to maximize the effectiveness of AES, present invention can increase the length of the encryption key using key derivation functions, such as BCRYPT [4] hash algorithm used in BSD® system. One important thing about key derivation function is that it has to be different than the function used to store the login password. Another possibility is to use two passwords, one for login and another to encrypt the private key Priᵤ. Both possibilities are contemplated by present invention. For the rest of description, it is assumed that the user 100 only has one password, both for login and for encrypting the private key Priᵤ.

### Domain certificate C_{D} generation

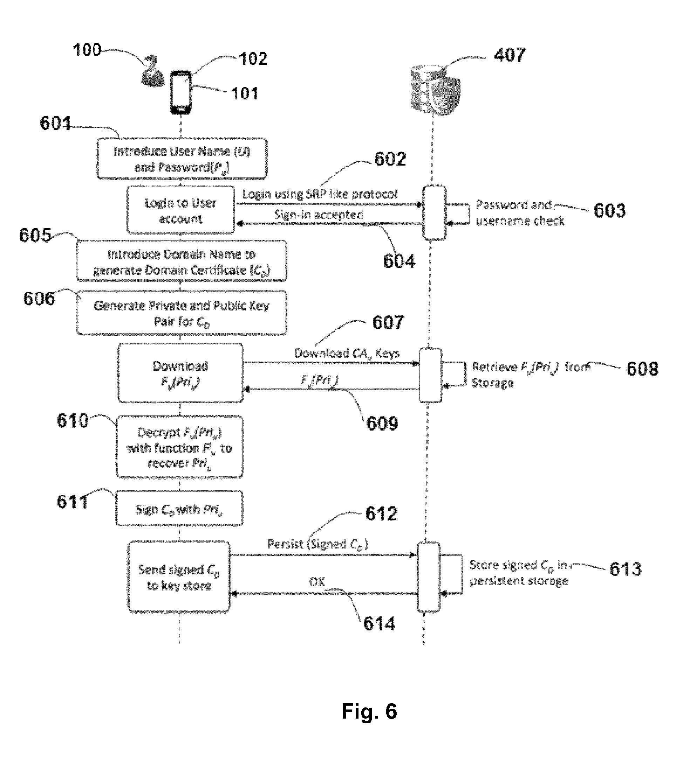

For any moment, the user 100 can decide to supervise the encrypted traffic data of a domain D. In order to perform the supervision, the user 100 generates a domain certificate C_{D} for domain D and signs it using the private key of Priᵤ. Fig. 6 details all the process. In order to generate the domain certificate C_{D}, user 100 first, step 601, login to the user account and after having been validly logged (steps 602-604) introduces, step 605, the domain D name that the user 100 wish to supervise. The computer application 102 will then generates, step 606, the private and public key pair for domain certificate C_{D}. Then, steps 607-609, the computer application 102 downloads the encrypted private key Priᵤ of Certification Authority CAᵤ. Using the correct password and decryption function, step 610, the computer application 102 recovers the original private key Priᵤ. At that time, the computer application 102 can sign, step 611, the domain certificate C_{D} and send the result back, step 612, to key store repository 407.

### Encrypted traffic data supervision mechanism

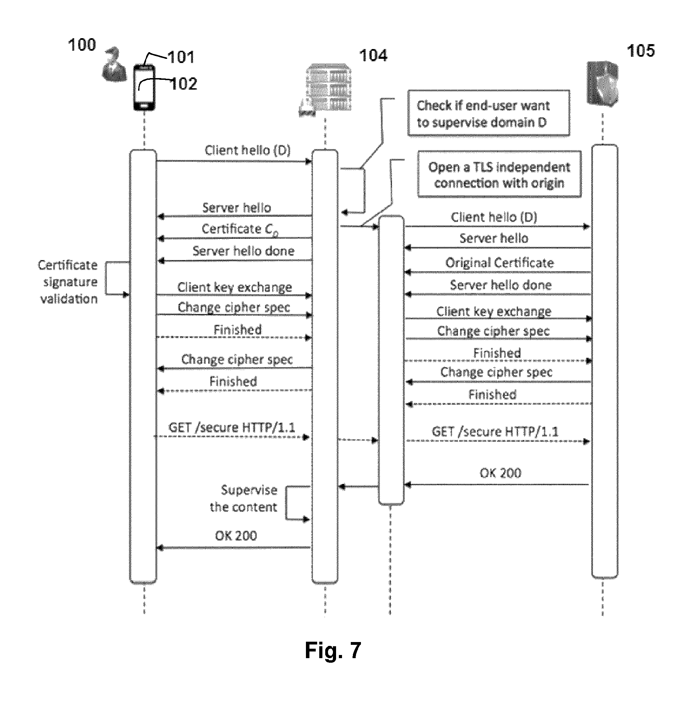

Whenever the user 100 wants to access an online service using an encrypted traffic data, such as an HTTP traffic request, the computing device 101 of the user 100 establishes a TLS connection [5] with the network traffic controller 104. Fig. 7 shows an example of the TLS connection establishment process with supervision. The computing device 101 first sends a "client hello" message to the server 105 and it will be intercepted by the network traffic controller 104 that will check if user 100 wants to supervise the encrypted traffic data of domain D. If so, the signed domain certificate *C_{D}* will be answer back to the computing device 101. The user 100 via the computing device 101 will perform certificate signature validation using the public key Pubᵤ. The computing device 101 and the network traffic controller 104 will then exchange the session keys and cipher specifications.

Once the TLS connection is established, the computing device 101 will send the HTTP get request. The network traffic controller 104 then can open, e.g. in parallel, an independent TLS connection with the server 105. When the HTTP request arrives to the network traffic controller 104, it will be forward to the server 105. Finally, the result from server 105 will be supervised and forwarded back to the computing device 101.

### Encrypted traffic data bypass Mechanism

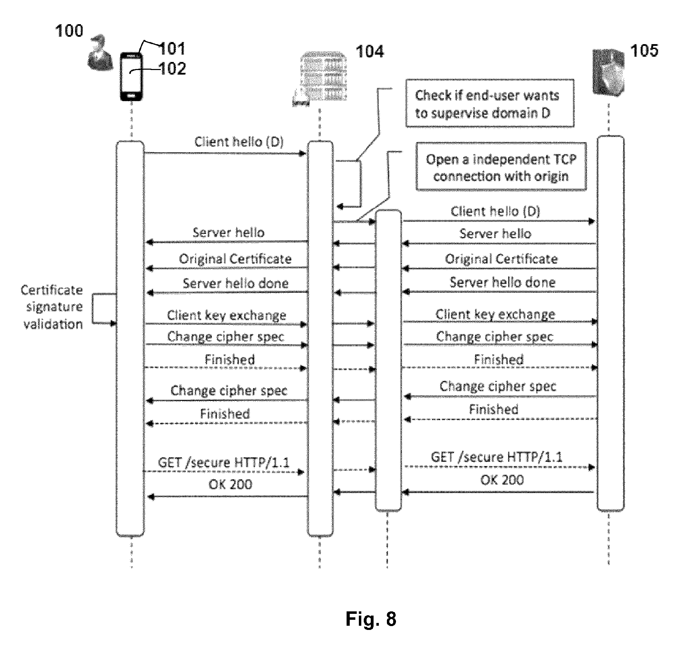

Fig. 8 shows an example of the network flow when traffic data is not supervised. In this case, the network traffic controller 104 doesn't establish an independent TLS connection. Instead, a TCP connection is established and all traffic data from the user 100 is forwarded to the server 105. The same happens for all traffic data from the server 105 that will be forwarded to the computing device 101. If network traffic controller 104 can work as an IP packet forwarder (just as a DPI), then no independent TCP connection will be required in the process and all IP packets could directly forward between the computing device 101 and the server 105.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

### References

[1] http://tools.ietf.org/html/draft-loreto-httpbis-trusted-proxy20-01
[2] http://tools.ietf.org/html/rfc2945
[3] Daemen, Joan; Rijmen, Vincent (March 9, 2003). "AES Proposal: Rijndael". National Institute of Standards and Technology. p. 1. Retrieved 21 February 2013.
[4] Provos, Niels; Talan Jason Sutton 2012; Mazières, David (1999). "A Future-Adaptable Password Scheme". Proceedings of 1999 USENIX Annual Technical Conference: 81-92.
[5] T. Dierks, E. Rescorla (August 2008). "The Transport Layer Security (TLS) Protocol, Version 1.2"

## Claims

1. User opt-in computer implemented method for monitoring network traffic data, based on a Certification Authority (CAᵤ) that is controlled by a user (100), wherein said user (100) has a computing device (101) with a computer application (102) installed therein, the method comprising using said computer application (102) for performing the following steps:
- generating a Certification Authority (CAᵤ) relative to the user (100) comprising at least a private key (Priᵤ) and a public key (Pubᵤ);
- generating a domain certificate (C_{D}) for a given domain (D) of a server (105, 106);
- signing the generated domain certificate (C_{D}) with said private key (Priᵤ); and
- sending the signed domain certificate (C_{D}) and the public key (Pubᵤ) at least to a network traffic controller (104).

2. The method of claim 1, wherein the generated domain certificate (C_{D}) is signed by the computer application (102) downloading an encrypted private key (Fᵤ(Priᵤ)) from a key store repository (407) of the computer application (102), said encrypted private key (Fᵤ(Priᵤ)) being the result of having encrypted the private key (Priᵤ) with an encryption function (Fᵤ).

3. The method of claim 2, comprising using, by the user (100) via the computer application (102), an inverse function of said encryption function (Fᵤ) to decrypt the encrypted private key (Fᵤ(Priᵤ)).

4. The method of claim 3, wherein said inverse function of said encryption function (Fᵤ) is kept secret by the user (100).

5. The method of claim 2, wherein the public key (Pubᵤ), the encrypted private key (FPriᵤ), the encryption function (Fᵤ) and the signed domain certificate (C_{D}) are stored in the key store repository (407) of the computer application (102).

6. The method of claim 1, wherein the private key (Priᵤ) and the public key (Pubᵤ) of said Certification Authority (CAᵤ) being generated upon the computer application (102) having verified an identification information provided by the user (100).

7. The method of claim 1, further comprising:
- receiving, by said network traffic controller (104), a request from the user (100) indicating a wish of the latter to create an encrypted connection with said domain (D);
- upon the network traffic controller (104) having checked that the user (100) wants to supervise said domain (D), sending the received signed domain certificate (C_{D}) to user (100) as the certificate for domain (D);
- establishing, by the network traffic controller (104), the encrypted connection with domain (D); and
- establishing a session key between the network traffic controller (104) and the user (100) for the rest of the encrypted communications of the user (100), wherein said communications are continuously supervised by the network traffic controller (104).

8. The method of claim 7, comprising establishing the encrypted connection with domain (D) in parallel of the sending of the signed domain certificate (C_{D}) to the user (100).

9. The method of claim 7, wherein said checking of the domain (D) in order to supervise it comprises checking that the domain (D) is not included in a data structure of the computer application (102), said data structure including a number of domains for which no supervision has to be performed by the network traffic controller (104).

10. The method of claim 7 or 8, wherein said encrypted connection comprises a Secure Sockets Layer/Transport Layer Security, or SSL/TLS, connection.

11. A network traffic controller for monitoring network traffic data of a user, comprising at least a supervision unit (206) configured to:
- intercept at least one request from a user (100) having a computing device (101) indicating a wish of the user (100) to create an encrypted connection with a given domain (D) of a server (105, 106);
- check that the user (100) wants to supervise said domain (D);
- in case of a valid check, send a previously received signed domain certificate (C_{D}) relative to user (100) to the latter as the certificate for domain (D);
- establish an encrypted connection with domain (D); and
- establish a session key with the user (100) for the rest of the encrypted communications of the user (100),
wherein the received signed domain certificate (C_{D}) being signed by a computer application (102) installed in the computing device (101) by means of:
- a first engine unit (409) configured to generate a Certification Authority (CAᵤ) relative to the user (100) comprising at least a private key (Priᵤ) and a public key (Pubᵤ); and
- a second engine unit (410) configured to generate the domain certificate (C_{D}) for the domain (D) and to sign the generated domain certificate (C_{D}) with said private key (Priᵤ).

12. The network traffic controller of claim 11, further comprising a hardware unit (200) configured to control said interception of the at least one request and a control unit (205) configured to control said hardware unit (200) and to provide a presentation layer for said supervision unit (206) visible for the user (100).

13. The network traffic controller of claim 11 or 12, wherein the supervision unit (206), the hardware unit (200) and the control unit (205) being located in a same geographical location.

14. The network traffic controller of claim 11 or 12, wherein the supervision unit (206), hardware unit (200) and the control unit (205) being located in different geographical locations.

15. A computer program product including code instructions that, when executed by at least one processor of a computer system implements a user opt-in method for monitoring network traffic data, based on a Certification Authority (CAᵤ) that is controlled by a user (100), comprising:
- generating a Certification Authority (CAᵤ) relative to a user (100) comprising at least a private key (Priᵤ) and a public key (Pubᵤ);
- generating a domain certificate (C_{D}) for a given domain (D) of a server (105, 106);
- signing the generated domain certificate (C_{D}) with said private key (Priᵤ); and
- sending the signed domain certificate (C_{D}) and the public key (Pubᵤ) at least to a network traffic controller (104).
